# EUROPÄISCHE PATENTSCHRIFT

(11) **EP 0 462 450 B1**
(45) Veröffentlichungstag und Bekanntmachung des Hinweises auf die Patenterteilung: **25.08.1993**
(21) Anmeldenummer: 91109234.4
(22) Anmeldetag: 06.06.1991
(51) Int. Cl.: B60R 19/18

(54) **Abschlussteil für Kraftfahrzeug**
Finishing element for motor vehicle
Elément de finition pour véhicule automobile

(30) Priorität: 18.06.1990 DE 4019333
(43) Veröffentlichungstag der Anmeldung: 27.12.1991
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE SOCIETE ANONYME, 92506 Rueil Malmaison Cedex (FR); Ford Motor Company, Dearborn Michigan 48126 (US)
(72) Erfinder: Vogt, Hans, W-5063 Overath (DE); Huerten, Oskar, W-5000 Köln 30 (DE)
(74) Vertreter: Messulam, Alec Moses

(56) Entgegenhaltungen:
- DE-A- 3 344 516
- FR-A- 1 336 323
- FR-A- 2 319 515

## Beschreibung

Die Erfindung bezieht sich auf ein Abschlußteil für Kraftfahrzeuge, der im Oberbegriff des Patentanspruches 1 erläuterten Art. Ein solches Abschlußteil ist aus dem Dokument FR-A-2 319 515 bekannt.

Aus der DE-C-23 30 494 ist ein Abschlußteil für Kraftfahrzeuge, ein Stoßfänger bzw. ein Karosserie-Frontende etwa der im Oberbegriff des Patentanspruches 1 erläuterten Art bekannt.

Bei dem bekannten Abschlußteil für Kraftfahrzeuge, das von einer formhaltenden, jedoch nachgiebigen Abdeckung und einem diese tragenden, formsteifen Querträger gebildet wird, ist die Abdeckung an ihrer Innenseite mit einer Vielzahl von vertikalen Stegen versehen, die mit dem Querträger abstützend zusammenwirken.

Das bekannte Abschlußteil weist den Nachteil auf, daß bei einem Aufprall die vertikalen Stege zwar elastisch verformt werden, diese Verformung jedoch nicht in bestimmter Weise kontrolliert erfolgt und hierdurch die Energieaufnahme nicht den optimalen Verlauf nimmt und die erwünschte vollständige Rückstellung der nachgiebigen Abdeckung nicht erreicht wird.

Aus der DE-A-31 17 379, die etwa den Gattungsbegriff der vorliegenden Erfindung bildet, ist ein Abschlußteil für Kraftfahrzeuge der im Oberbegriff des Patentanspruches 1 erläuterten Art bekannt, bei dem die Abdeckung an ihrer Innenseite mit etwa horizontal ausgerichteten Führungsstegen an Schenkeln der U-förmigen Aufnahmen am Querträger anliegen und mit diesen abstützend zusammenwirken.

Das bekannte Abschlußteil weist den Nachteil auf, daß bei einem Aufprall den mit vertikalen Stegen verbundenen horizontalen Führungsstegen durch die Form der U-förmigen Aufnahme keine kontrollierte Ausweichbewegung vorgegeben wird, wodurch es zu einem unkontrollzierten Einknicken der vertikalen Stege und der horizontalen Führungsstege kommt, was wieder einen ungünstigen Verlauf der Energieaufnahme mit sich bringt und die erwünschte Rückstellung der nachgiebigen Abdeckung beeinträchtigt.

Aus der EP-A-0,256,174 ist ein Abschlußteil für Kraftfahrzeuge, etwa der im Oberbegriff des Patentanspruches 1 erläuterten Art bekannt, bei dem die Abdeckung an ihrer Innenseite mit etwa horizontal ausgerichteten V- bzw. U-förmig profilierten Stegen versehen ist, die mit einem Querträger mit U-förmigen Aufnahmen abstützend zusammenwirken.

Die bekannten Ausführungen haben den Nachteil, daß nur ein stetiger Anstieg der Kraft-Weg-Kurve erreicht werden kann, da beim Einknicken der horizontalen Stege ein starkes Einfallen der Kurve auftritt.

Die Aufgabe der Erfindung ist es, ein Abschlußteil für Kraftfahrzeuge, der im Oberbegriff des Patentanspruches 1 erläuterten Art derart zu verbessern, daß es bei geringem Herstellungs- und Montageaufwand einen günstigen Verlauf der Energieaufnahme bei einem Aufprall, d.h. eine angenähert rechteckige Kraft-Weg-Kurve bereitstellt und nach dem Aufprall die erwünschte allmähliche Rückstellung der nachgiebigen Abdeckung möglichst vollständig sicherstellt.

Gemäß der Erfindung wird diese Aufgabe gelöst, indem ein Abschlußteil für Kraftfahrzeuge, der im Oberbegriff des Patentanspruches 1 erläuterten Art die im Kennzeichenteil des Patentanspruches 1 aufgeführten Merkmale aufweist.

Durch kontinuierliches Einrollen der Führungsstege und der hierfür erforderlichen Biegearbeit wird eine angenäherte rechteckige Kraft-Weg-Kurve bei der Energieaufnahme erreicht.

Hinzu kommt, daß durch die unter Last erfolgenden Verformungen noch eine irreversible Gleitarbeit beim Einrollen der Stege verbraucht wird, wodurch Rückprallenergie vermindert wird, was zu einem günstigeren Sicherheitsverhalten des Abschlußteiles beiträgt.

Im Patentanspruch 2 ist eine besonders zweckmäßige Ausführung der Erfindung erläutert.

In den weiteren Ansprüchen sind weitere vorteilhafte Ausführungsformen der Erfindung aufgezeigt.

Die Erfindung wird anhand eines in den Zeichnungen gezeigten Ausführungsbeispieles näher erläutert. Es zeigt:
- Fig. 1: eine teilweise geschnittene Schrägrissdarstellung eines erfindungsgemäßen Abschlußteiles für ein Kraftfahrzeug;
- Fig. 2: einen vertikalen Schnitt entlang der Längsmittelebene des Kraftfahrzeuges bei unbelastetem Abschlußteil und
- Fig. 3: einen Schnitt wie Fig. 2 bei einem durch einen Aufprall verformten Abschlußteil.

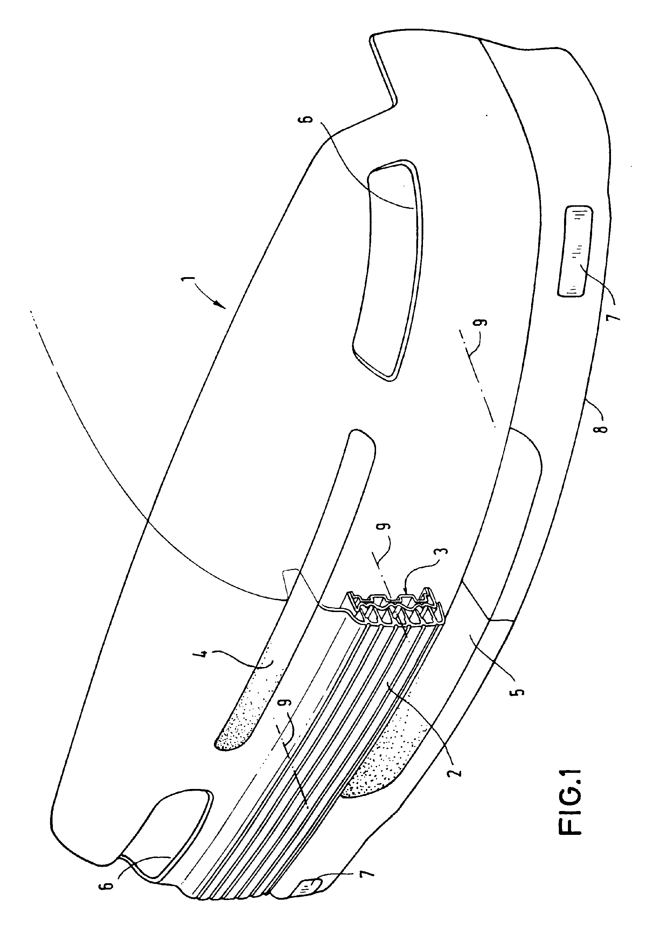

In Fig. 1 ist ein Abschlußteil 1 für Kraftfahrzeuge als ein einstückiges Karosserie-Frontende ausgebildet.

Das Abschlußteil 1 besteht hierbei aus einer formhaltenden, jedoch nachgiebigen Abdeckung 2 aus einem elastischen Kunststoffmaterial, z.B. einem Polyurethan, Polypropylen und aus einem formsteifen Querträger 3, der sowohl als ein Blechpreßteil als auch als ein entsprechendes Kunststoffformteil hergestellt sein kann.
Die formhaltende, jedoch nachgiebige Abdeckung 2 kann in bekannter Weise Kühlluftöffnungen 4 und 5 und Scheinwerfer- und Blinkleuchten-Aufnahmen 6 bzw. 7 aufweisen. Der untere Endbereich 8 der Abdeckung 2 kann in bekannter Weise als Spoiler ausgeformt sein.

Die formhaltende, jedoch nachgiebige Abdeckung 2 ist am formsteifen Querträger 3 über mehrere Befestigungsanordnungen 9 festgehalten, die die Abdeckung 2 unter Federkraft gegen den Querträger 3 halten.

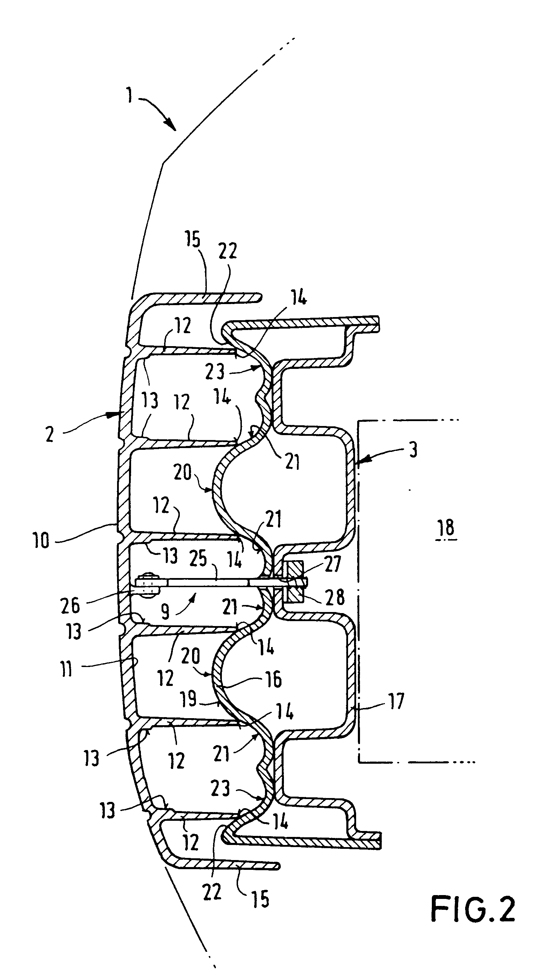

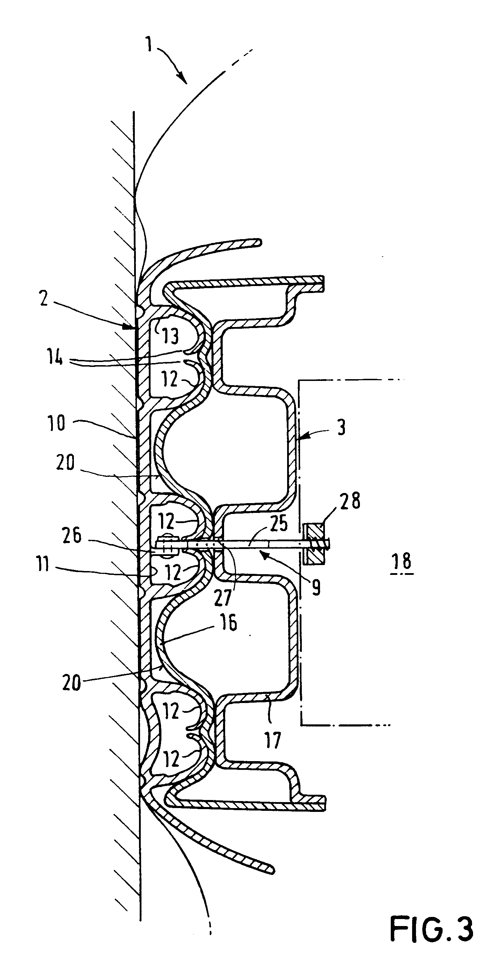

Die besondere erfindungsgemäße Ausführung der formhaltenden, jedoch nachgiebigen Abdeckung 2 in ihrem Zusammenwirken mit dem formsteifen Querträger 3 wird anhand der Figuren 2 und 3 näher erläutert.

Die Abdeckung 2 besteht im wesentlichen aus einem in einem vertikalen Querschnitt U-förmigen Formteil, dessen Außenseite 10 entsprechend den stilistischen Anforderungen geformt ist und an dessen Innenseite 11 eine Vielzahl von horizontal ausgerichteten Führungsstegen 12 ausgebildet sind.

Die horizontal ausgerichteten Führungsstege 12 sind an der Innenseite 11 über eine Fußverstärkung 13 mit Radius angeformt und die Führungsstege 12 verjüngen sich zu ihren freien Enden 14 hin.

Obere und untere horizontale Stege 15 sind zur Abdeckung des Querträgers erforderlichenfalls vorgesehen.

Der formsteife Querträger 3 besteht im vorliegenden Ausführungsbeispiel aus einem Vorderteil 16 und einem Hinterteil 17, die sowohl als Blechpreßteil oder aber auch als Kunststoff-Formteile ausgebildet sein können, die miteinander zu einem kastenförmigen Querträger 3 verbunden sind.

Der aus den beiden Bauteilen 16 und 17 gebildete kastenförmige Querträger 3 kann in herkömmlicher Weise mit den vorderen Enden von Längsträgern 18 einer Karosseriestruktur verbunden sein.

Das Vorderteil 16 ist an seiner zur Abdeckung 2 liegenden Außenseite 19 mit Wölbungen 20 und 22 versehen, die sich von den Basisrundungen 21 und 23 aufweisenden U-förmigen Aufnahmen am Querträger 3 nach vorne erstrecken.

Das Hinterteil 17 weist eine Meanderform auf, die lediglich sicherstellen soll, daß der formsteife Querträger 3, der sich im wesentlichen über die gesamte Breite des Kraftfahrzeuges erstreckt, entsprechend stabil und tragfähig ist.

Die Verbindung zwischen dem Vorderteil 16 und dem Hinterteil 17 kann in herkömmlicher Weise durch Verschweißen, Nieten, Schrauben, Kleben und dergleichen erfolgen.

Die Befestigungsanordnungen 9 bestehen in der vorliegenden Ausführung aus elastischen Zuggliedern 25 aus Gummi, die an entsprechenden Laschen 26 an der Abdeckung 2 angreifen und sich durch Öffnungen 27 im Querträger 3 erstrecken und über Halteteile 28 festgelegt sind.

Wie aus Fig. 2 ersichtlich ist, liegen die freien Enden 14 der Führungsstege 12 an den Wölbungen 20 und 22 weit vorn berührend und abstützend an. Die Kraft der Anlage wird hierbei durch die Vielzahl der Befestigungsanordnungen 9 und deren Federkraft bestimmt.

Wird nun wie aus Fig. 3 ersichtlich ist, die Abdeckung 2 durch einen Aufprall gewaltsam in Richtung auf den Querträger 3 verschoben, so sorgen die die Basisrundungen 21 und 23 aufweisenden U-förmigen Aufnahmen für eine kontrollierte Biegeverformung der Führungsstege 12 und durch die für das Biegen der Führungsstege erforderlichen Kraft und der zu überwindenden Reibung zwischen den Führungsstegen 12 und den Basisrundungen 21 und 23 wird die Aufprallenergie in Wärmeenergie umgesetzt.

Sobald die Aufprallkraft aufgehoben wird, sorgt die Elastizität des Materials der Abdeckung 2 für eine allmähliche Rückstellung, wobei durch die Tatsache, daß die Verformung der Führungsstege 12 nicht durch unkontrolliertes Knicken sondern durch kontrolliertes Biegen erfolgt, nach gewisser Zeit eine vollständige Rückstellung der Abdeckung erreicht werden kann.

## Patentansprüche

1. Abschlußteil (1) für Kraftfahrzeuge, das von einer formhaltenden, jedoch nachgiebigen Abdeckung (2) und einem diese tragenden formsteifen Querträger (3) gebildet wird, wobei die Abdeckung an ihrer Innenseite (11) mit etwa horizontal ausgerichteten Führungsstegen (12) an Schenkeln der U-förmigen Aufnahmen am Querträger anliegen und mit diesen abstützend zusammenwirken und sich bei Entlastung infolge ihrer Elastizität wieder aufrichten und die Abdeckung (1) in ihre Ausgangslage zurückstellen,
**dadurch gekennzeichnet**, daß
- die Führungsstege (12) seitlich und weit vorn an Wölbungen (20 bzw. 22) der U-förmigen Aufnahmen anliegen und
- die U-förmigen Aufnahmen große Basisrundungen (21 bzw. 23) aufweisen und
- bei einem Aufprall die Führungsstege (12) unter elastischer Biegeverformung in die Basisrundungen (21 und 23) eingeschoben werden.

2. Abschlußteil nach Anspruch 1,
**dadurch gekennzeichnet**, daß
-paarweise angeordnete Führungsstege (12) an den abliegenden Seiten der Wölbungen (20 bzw. 22) durch die aufeinander zulaufenden Basisrundungen (21/21 bzw. 21/23) entgegengesetzten Biegeverformungen ausgesetzt sind.

3. Abschlußteil für Kraftfahrzeuge nach den Ansprüchen 1 und 2,
**dadurch gekennzeichnet**, daß
-die Führungsstege (12) mit Fußverstärkungen (13) mit Radius angeformt sind, die ein Wiederaufrichten fördern und Materialbeanspruchungs-Merkmale an der Aussenhaut verhindern.

4. Abschlußteil für Kraftfahrzeuge nach den Ansprüchen 1 und 2,
**dadurch gekennzeichnet**, daß
-der formsteife Querträger (3) als ein Blechpreßteil ausgebildet ist.

5. Abschlußteil für Kraftfahrzeuge nach den Ansprüchen 1 und 3,
**dadurch gekennzeichnet**, daß
-der formsteife Querträger (3) als ein Kunststoff-Faserverbund-Formteil ausgebildet ist.

## Claims

1. End part (1) for motor vehicles, which is formed by a shape-retaining but resilient cover (2) and a dimensionally stable transverse bearer (3) carrying the latter, wherein approximately horizontally aligned guide webs (12) provided on the inner side (11) of the cover lie against legs of the U-shaped sockets on the transverse bearer, cooperate therewith to provide support, and, when relieved of load, straighten out again because of their elasticity and restore the cover (1) to its starting position, characterised in that the guide webs (12) lie laterally and far forward against convex curvatures (20 and 22) on the U-shaped sockets, and the U-shaped sockets have large base roundings (21 and 23), and in the event of a collision the guide webs (12) are pushed into the base roundings (21 and 23), undergoing elastic bending deformation.

2. End part according to Claim 1, characterised in that guide webs (12) disposed in pairs on the mutually opposite sides of the convex curvatures (20 and 22) are subjected to oppositely directed bending deformations by the converging base roundings (21/21 and 21/23 respectively)

3. End part for motor vehicles according to Claims 1 and 2, characterised in that the guide webs (12) are formed with radiused foot reinforcements (13), which assist restraightening and prevent material stress characteristics on the outer skin.

4. End part for motor vehicles according to Claims 1 and 2, characterised in that the dimensionally stable transverse bearer (3) is in the form of a sheet metal pressing.

5. End part for motor vehicles according to Claims 1 and 3, characterised in that the dimensionally stable transverse bearer (3) is in the form of a fibre-reinforced plastics material moulding.

## Revendications

1. Pièce de fermeture (1) pour véhicules automobiles, comprenant une coiffe (2) à constance de forme, néanmoins douée de souplesse, et un support transversal (3) de forme rigide, qui porte ladite coiffe, cette coiffe étant appliquée à sa face interne (11), par des membrures de guidage (12) orientées à peu près horizontalement, contre des branches des logements en U ménagés sur le support transversal, avec lesquels elle coopère en exerçant un effet d'appui, lesdites membrures se redressant lors d'un soulagement, suite à leur élasticité, et rappelant élastiquement la coiffe (2) à sa position initiale,
caractérisée par le fait que
- les membrures de guidage (12) sont appliquées, latéralement et loin en avant, contre des bombements (20, respectivement 22) des logements configurés en U,
- les logements configurés en U présentent de grands arrondis de base (21, respectivement 23), et
- lors d'un impact, les membrures de guidage (12) sont encastrées dans les arrondis de base (21 et 23) avec déformation élastique par cintrage.

2. Pièce de fermeture selon la revendication 1,
caractérisée par le fait que
- des membrures de guidage (12) agencées par paires sont soumises à des déformations opposées par cintrage, contre les faces des bombements (20, respectivement 22) éloignées, sous l'effet des arrondis de base (21/21, respectivement 21/23) convergeant les uns vers les autres.

3. Pièce de fermeture pour véhicules automobiles, selon les revendications 1 et 2,
caractérisée par le fait que
- les membrures de guidage (12) sont munies, solidairement, de renforts curvilignes de base (13) qui favorisent un redressement et empêchent des phénomènes de sollicitation de la matière sur l'enveloppe extérieure.

4. Pièce de fermeture pour véhicules automobiles, selon les revendications 1 et 2,
caractérisée par le fait que
- le support transversal (3) de forme rigide est réalisé en tant que pièce en tôle emboutie.

5. Pièce de fermeture pour véhicules automobiles, selon les revendications 1 et 3,
caractérisée par le fait que
- le support transversal (3) de forme rigide est réalisé en tant que pièce moulée composite, à base de matière plastique et de fibres.
